(19) Europäisches Patentamt / European Patent Office / Office européen des brevets

(11) **EP 2 481 718 A1**

(12) **EUROPEAN PATENT APPLICATION**
published in accordance with Art. 153(4) EPC

(43) Date of publication:
01.08.2012 Bulletin 2012/31

(21) Application number: 10818849.1

(22) Date of filing: 24.09.2010

(51) Int Cl.:
*C04B 35/64* (2006.01)          *B01D 39/20* (2006.01)
*B01D 46/00* (2006.01)          *C04B 35/46* (2006.01)
*C04B 38/00* (2006.01)

(86) International application number:
**PCT/JP2010/066531**

(87) International publication number:
**WO 2011/037177 (31.03.2011 Gazette 2011/13)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: 25.09.2009 JP 2009221185

(71) Applicant: **Sumitomo Chemical Co., Ltd
Chuo-ku, Tokyo 104-8260 (JP)**

(72) Inventors:
• **NARUMI, Masayuki
Niihama-shi
Ehime 792-0811 (JP)**

• **SUZUKI, Keiichiro
Niihama-shi
Ehime 792-0871 (JP)**
• **TAKAMOTO, Tamotsu
Niihama-shi
Ehime 792-0025 (JP)**

(74) Representative: **Vossius & Partner
Siebertstrasse 4
81675 München (DE)**

(54) **METHOD FOR PRODUCING CERAMIC FIRED ARTICLE**

(57) The present invention aims to provide a process for producing a fired body with a high linear shrinkage ratio during firing (firing shrinkage ratio) without a damage of the shape of the shaped body, such as the honeycomb structure. The present invention is a process for producing a ceramics fired body comprising a step of firing a shaped body, wherein a linear shrinkage ratio in dimension of the fired body to the shaped body (the linear shrinkage ratio (%) = (dimension of the shaped body - dimension of the fired body) / (dimension of the shaped body) $\times 100$) is not lower than 1% and the shaped body is fired while being disposed on a mat made of a ceramics having a high thermal conductivity.

EP 2 481 718 A1

**Description**

TECHNICAL FIELD

The present invention relates to a process for producing a ceramics fired body.

BACKGROUND ART

Ceramics is classifiable with their constitutive elements and many kinds of ceramics are known. Particularly, aluminum titanate-based ceramics is known as ceramics having excellent heat resistance and low thermal expansibility, contains titanium and aluminum as constitutive elements, and has an aluminum titanate crystal pattern in an x-ray diffraction spectrum. Aluminum titanate-based ceramics have conventionally been used as firing tools such as crucibles, and recently, the utility value of aluminum titanate-based ceramics in industrial fields is increasing as a material for constituting a ceramics filter for collecting fine carbon particles contained in exhaust gases discharged from an internal combustion engine such as a diesel engine.

As a process for producing an aluminum titanate-based ceramics, a process of firing a starting material mixture is known, wherein the starting material mixture contains a powder of a titanium source compound such as titania (hereinafter, referred to as titanium source powder) and a powder of an aluminum source compound such as alumina (hereinafter, referred to as aluminum source powder) (Patent Document 1).

However, in the case where aluminum titanate is prepared by firing starting material powders containing an aluminum source powder and a titanium source powder or a shaped body of the starting material powders, the process has a problem that the starting material powders or the shaped body considerably shrinks during firing; that is, the shrinkage ratio during firing is high. When the shrinkage ratio during firing is high, cracking is caused easily.

In order to solve the problems, Patent Document 2 proposes the process for producing an aluminum titanate-based ceramics honeycomb structure by shaping the starting material mixture containing a titania powder and an alumina powder with a specified particle diameter distribution, and firing thus obtained shaped body.

Generally, in the production of a ceramics fired body, various processes have been investigated for preventing cracking during firing as described above (for example, Patent Document 3).

PRIOR ART DOCUMENTS

PATENT DOCUMENTS

Patent Document 1: WO 05/105704
Patent Document 2: WO 08/078747
Patent Document 3: Japanese Patent Application Laid-Open No. 2002-249384

SUMMARY OF THE INVENTION

PROBLEMS TO BE SOLVED BY THE INVENTION

On the other hand, in the case where a fired body comprising an aluminum titanate-based ceramics is used for the ceramics filters for example, the aluminum titanate-based fired body constituting the filter is required to be excellent in porous property (having large pore diameter and open porosity) from the viewpoint of an improvement in filter capacity (exhaust gas treatment capacity, high soot deposition capacity, pressure loss, and the like.). Further, in the case where a porous ceramics shaped body comprising an aluminum titanate-based ceramics is used for the ceramics filters, particularly exhaust gas filters of diesel engines (Diesel Particulate Filter; hereinafter, also referred to as DPF), the shaped body is required to have properly controlled pore characteristics.

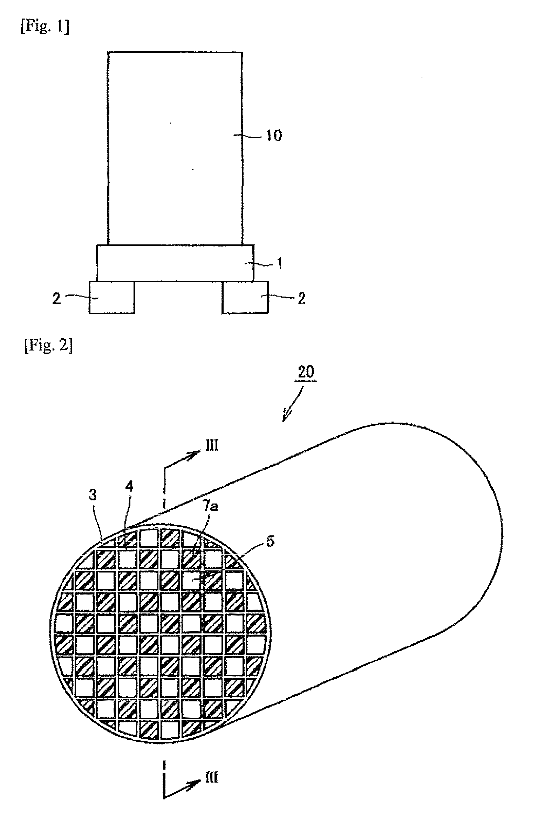

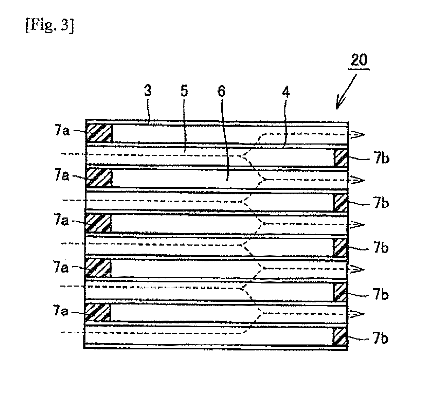

Such a filter includes a ceramics honeycomb structure 20 as depicted in the schematic view of Fig. 2. The ceramics honeycomb structure 20 depicted in Fig. 2 has a honeycomb structure comprising partition walls 4 forming a plurality of flow channels and an outer circumferential wall 3. The plurality of flow channels are alternately sealed with a sealing part 7a. Fig. 3 exhibits a cross-sectional view along the III-III line in Fig. 2. The ceramics honeycomb structure 20 has a structure in which flow channels 6 sealed by a sealing part 7a in the upstream side and flow channels 5 sealed by a sealing part 7b in the downstream side are arranged alternately. As depicted in Fig. 2 and Fig. 3, the honeycomb shape is accurately formed in the entire of the ceramics honeycomb structure body whereby the filter capacity may be further heightened.

In view of the above problems, the present invention aims to provide a process for producing a fired body with a high linear shrinkage ratio during firing (firing shrinkage ratio) without a damage of the shape of the shaped body, such as the honeycomb structure.

DISCLOSURE OF THE INVENTION

The present invention is a process for producing a ceramics fired body comprising a step of firing a shaped body, wherein a linear shrinkage ratio in dimension of the fired body to the shaped body (the linear shrinkage ratio (%) = (dimension of the shaped body · dimension of the fired body) / (dimension of the shaped body) $\times$100) is not lower than 1% and the shaped body is fired while being disposed on a mat made of a ceramics having a high thermal conductivity.

The ceramics having a high thermal conductivity preferably has thermal conductivity of not lower than 50 W/m · K at normal temperature. The ceramics having a high thermal conductivity preferably contains aluminum nitride or silicon carbide.

The fired body can be produced with the production process of the present invention even in the case where a surface of the shaped body, the surface being be disposed on the mat, has a cross-sectional area of not less than 7850 mm$^2$ and a height of the shaped body is not lower than 50 mm.

The production process of the present invention is preferable when the starting material constituting the shaped body contains an organic matter of not less than 10% by mass.

The shaped body may be in a honeycomb structure for example. The shaped body preferably has an aperture ratio of not lower than 40% and not higher than 80% in a cross section parallel to the surface to be disposed on the mat, and also preferably has a partition wall thickness of not thinner than 0.1 mm and not thicker than 1 mm.

The production process of the present invention include the embodiments where (i) the shaped body contains an aluminum source powder and a titanium source powder, and the shaped body forms an aluminum titanate composition by firing, (ii) the shaped body contains an aluminum source powder, a titanium source powder, and a magnesium source powder, and the shaped body forms an aluminum magnesium titanate composition by firing, and (iii) the shaped body contains an aluminum source powder, a titanium source powder, a magnesium source powder, and a silicon source powder, and the shaped body forms an aluminum magnesium titanate composition by firing.

The molar ratio of the aluminum source powder expressed on $Al_2O_3$ basis to the titanium source powder expressed on $TiO_2$ basis is preferably 35/65 to 45/55. The molar ratio of the magnesium source powder expressed on MgO basis is preferably 0.03 to 0.15 relative to the total amount of the aluminum source powder expressed on $Al_2O_3$ basis and the titanium source powder expressed on $TiO_2$ basis. The content of the silicon source powder expressed on $SiO_2$ basis is preferably 0.1 to 0.10 parts by mass relative to 100 parts by mass of the total amount of the aluminum source powder expressed on $Al_2O_3$ basis and the titanium source powder expressed on $TiO_2$ basis.

ADVANTAGES OF THE INVENTION

According to the production process of the present invention, cracking may be suppressed or prevented at the time of producing a shaped body with a large shrinkage ratio.

BRIEF DESCRIPTION OF THE DRAWINGS

Fig. 1 is a schematic view exhibiting one example of arrangement in a shaped body during a firing step.
Fig. 2 is a schematic view exhibiting one example of a ceramics honeycomb structure.
Fig. 3 is a cross-sectional view along the III-III line in Fig. 2.

BEST MODE FOR CARRYING OUT THE INVENTION

Hereinafter, the present invention will be described more in detail. Additionally, the following description of embodiments are described with reference to drawings, and those denoted with the same reference symbols represents the same parts or equivalent parts in these drawings of the present application. The present invention should not be limited to the embodiments illustrated in the drawings.

<Process for producing ceramics fired body>

The ceramics fired body of the present invention is produced by a process comprising a step of firing a shaped body (hereinafter, may be referred to as firing step). The production process of the present invention may include other steps such as a drying step to dry a shaped body and a degreasing step to be carried out before the firing step, as described in the following. In the present invention, a shaped body means an unfired ceramics shaped body and may also include a shaped body after drying step and a shaped body after degreasing step, both subsequent to shaping.

Fig. 1 is a schematic view exhibiting one example of arrangement in a shaped body during a firing step. In the process for producing a ceramics fired body of the present invention, a shaped body 10 is fired in the state where the shaped body is disposed on a mat 1 as depicted in Fig. 1. In the present invention, the mat 1 is characteristically a ceramics with a high thermal conductivity. The mat 1 has the surface area which is same as or larger than the bottom surface area of the shaped body 10. The efficiency of the thermal conduction during firing can be improved by covering the entire bottom surface of the shaped body 10 with the mat.

The mat 1 is preferable to be disposed on a spacer 2 as depicted in Fig. 1. Use of the spacer may efficiently transfer the heat to the entire shaped body by utilizing radiation heat from the bottom surface in the furnace. A pedestal (not illustrated) may also be set between the mat 1 and the shaped body 10. As the pedestal, an unfired pedestal (called *tochi*) made of an unfired ceramics with a honeycomb structure similar to the shaped body or a fired pedestal obtained by firing the unfired pedestal can be used.

<Ceramics with high thermal conductivity >

As the ceramics having a high thermal conductivity constituting the mat, those having a higher thermal conductivity at normal temperature (for example, 25°C) than that of the shaped body are preferable, and particularly, those having a thermal conductivity of not lower than 50 W/m · K at normal temperature is preferable. The thermal conductivity of the ceramics having a high thermal conductivity at normal temperature is more preferably not lower than 75 W/ m · K, and even more preferably not lower than 100 W/ m · K. The higher thermal conductivity is more preferable from the viewpoint of preventing cracking in the fired body. The upper limit of the thermal conductivity is not particularly limited, and may be, for example, 300 W/ m · K.

The thermal conductivity may be measured according to, for example, a measurement method defined in JIS R1611 (laser flash method).

The ceramics having a high thermal conductivity preferably contains aluminum nitride (AlN) or silicon carbide (SiC). In the case of these ceramics, those having the thermal conductivity in the above-mentioned range are easily available. The ceramics having a high thermal conductivity of the present invention may also be ceramics such as silicon nitride ($Si_3N_4$), having a thermal conductivity in the above-mentioned range.

The mat may be those made of materials containing the ceramics having a high thermal conductivity, and may be entirely constituted with one kind of ceramics with a high thermal conductivity or may be constituted with two or more kinds of ceramics with a high thermal conductivity. In the case where the thermal conductivity is high as mentioned above in the entire of the mat, the thermal stress applied to the shaped body during firing can be reduced.

The mat containing the ceramics having a high thermal conductivity may be in a plate-form, which may be obtained by cutting a commercialized plate material in a desired size, a sagger, a box sheath, and the like. Regardless of the shape of the mat, the thickness of the mat immediately under the shaped body should be, for example, 1 mm to 50 mm. By adjusting the thickness in this range, heat may be transferred efficiently. In the present invention, the mat may be laminated with other materials as long as the surface material on which the shaped body is disposed is made of the ceramics having a high thermal conductivity. For example, the mat may be a laminated structure of a material with a lower thermal conductivity than that of the ceramics having a high thermal conductivity at normal temperature (for example, a ceramics with a low thermal conductivity of not higher than 20 W/ m · K or a floor plate made of conventionally used mullite) and the ceramics having a high thermal conductivity.

<Starting material powder>

The fired body of the present invention may be produced by, for example, firing a shaped body of a starting material mixture containing starting material powders such as an aluminum source powder and a titanium source powder. The starting material mixture may contain a magnesium source powder and a silicon source powder. In the case where the starting material powders contain an aluminum source powder and a titanium source powder, an aluminum titanate composition is formed by firing. In the case where the starting material powders contain an aluminum source powder, a titanium source powder, and a magnesium source powder, or in the case where the starting material powders further contain a silicon source powder, an aluminum magnesium titanate composition is formed by firing. In the present invention, a composition formed by firing a starting material mixture containing at least an aluminum source powder and a titanium source powder as starting material powders is referred to as an aluminum titanate-based fired body. An aluminum titanate-based fired body obtained by using such a starting material mixture is a fired body comprising an aluminum titanate-based crystal.

An aluminum source powder contained in the starting material mixture to be used in the present invention is a powder of a substance to be led to an aluminum component constituting an aluminum titanate-based fired body. Examples of the aluminum source powder include a powder of alumina (aluminum oxide). The alumina may be crystalline or amorphous. In the case where the alumina is crystalline, examples of the crystal type of the alumina include $\alpha$-type, $\gamma$-type, $\delta$-type, and $\theta$-type, and particularly, $\alpha$-type is preferable to be used.

The aluminum source powder may be a powder of a substance to be led to alumina by firing in the air. Examples of such a substance include an aluminum salt, an aluminum alkoxide, aluminum hydroxide, and metal aluminum.

The aluminum salt may be a salt with inorganic acid or a salt with organic acid. Specific examples of the inorganic salt include aluminum nitrates such as aluminum nitrate and ammonium aluminum nitrate; and aluminum carbonates such as ammonium aluminum carbonate. Examples of the organic salt include aluminum oxalate, aluminum acetate, aluminum stearate, aluminum lactate, and aluminum laurate.

Specific examples of the aluminum alkoxide include aluminum isopropoxide, aluminum ethoxide, aluminum sec-butoxide, and aluminum tert-butoxide.

The aluminum hydroxide may be crystalline or amorphous. In the case where aluminum hydroxide is crystalline, various kinds of crystal types can be used, and specific examples of the crystal type include gibbsite type, bayerite type, nordstrandite type, boehmite type, and pseudoboehmite type. Examples of the amorphous aluminum hydroxide include aluminum hydrolysate obtained by hydrolyzing an aqueous solution of a water-soluble aluminum compound such as an aluminum salt or an aluminum alkoxide.

In the present invention, as the aluminum source powder, one kind may be used solely and two or more kinds may be used in combination.

Out of the substances, as the aluminum source powder, an alumina powder is preferable and an $\alpha$-type alumina powder is more preferable. Note that the aluminum source powder may contain trace components derived from the raw materials or inevitably contained in the production process.

As the aluminum source powder, a commercialized product may be used as it is, or an aluminum source powder satisfying a preferable particle size distribution may be used, which is obtained by subjecting a commercialized aluminum source powder to, for example, the following treatment.

(a) Classification of a commercialized aluminum source powder by sieving and the like
(b) Granulation of a commercialized aluminum source powder by a granulator and the like

In the present invention, the aluminum source powder used is preferably to have a pore diameter corresponding to a cumulative percentage of 50% on a volume basis (D50) of not smaller than 20 $\mu$m and not larger than 60 $\mu$m, which is measured by laser diffractometry. In the case where the aluminum source powder having D50 within the range is used, an aluminum titanate-based fired body exhibiting an excellent porous property is obtained. The D50 of the aluminum source powder is more preferably not smaller than 25 $\mu$m, even more preferably not smaller than 30 $\mu$m, and not larger than 60 $\mu$m.

A titanium source powder contained in the starting material mixture is a powder of a substance to be led to a titanium component constituting an aluminum titanate-based fired body. Examples of such a substance include a powder of titanium oxide. Examples of the titanium oxide include titanium(IV) oxide, titanium(III) oxide, and titanium(II) oxide, and titanium(IV) oxide is preferably used. The titanium(IV) oxide may be crystalline or amorphous. In the case where the titanium(IV) oxide is crystalline, examples of the crystal type of the titanium(IV) oxide include anatase type, rutile type, and brookite type. The anatase type and rutile type titanium(IV) oxide are more preferable.

The titanium source powder to be used in the present invention may be a powder of a substance to be led to titania (titanium oxide) by firing in the air. Examples of such a substance include a titanium salt, a titanium alkoxide, titanium hydroxide, titanium nitride, titanium sulfide, and metal titanium.

Specific examples of the titanium salt include titanium trichloride, titanium tetrachloride, titanium(IV) sulfide, titanium(VI) sulfide, and titanium(IV) sulfate. Specific examples of the titanium alkoxide include titanium(IV) ethoxide, titanium(IV) methoxide, titanium(IV) tert-butoxide, titanium(IV) isobutoxide, titanium(IV) n-propoxide, titanium(IV) tetraisopropoxide, and their chelate compounds.

In the present invention, one kind may be used solely and two or more kinds may be used in combination, as the titanium source powder.

Out of the substances, as the titanium source powder, a titanium oxide powder is preferable to be used and a titanium(IV) oxide powder is more preferable to be used. The titanium source powder may contain trace components derived from the raw materials or inevitably contained in the production process.

The particle diameter of the titanium source powder is not particularly limited, and generally, a titanium source powder used has a particle diameter corresponding to a cumulative percentage of 50% on a volume basis (D50) in a range of 0.1 to 25 $\mu$m, which is measured by laser diffractometry. In order to attain a sufficiently low firing shrinkage ratio, it is preferable to use a titanium source powder having D50 in a range of 1 to 20 $\mu$m. Note that a titanium source powder may sometimes exhibit a bimodal particle size distribution, and in the case where a titanium source powder exhibiting such bimodal particle size distribution is used, the particle diameter of particles forming the peak of the larger particle diameter measured by laser diffractometry is preferably in a range of 20 to 50 $\mu$m.

The mode diameter of a titanium source powder measured by laser diffractometry is not particularly limited, and those in a range of 0.1 to 60 $\mu$m may be used.

In the present invention, the molar ratio of the aluminum source powder expressed on $Al_2O_3$ (alumina) basis and the titanium source powder expressed on $TiO_2$ (titania) basis in the starting material mixture is preferably in a range of 35 / 65 to 45 / 55, and more preferably in a range of 40 / 60 to 45 / 55. Use of an excess amount of the titanium source powder to the aluminum source powder within the range efficiently lowers the shrinkage ratio during firing the shaped body of the starting material mixture.

The starting material mixture may contain a magnesium source powder. In the case where the starting material mixture contains the magnesium source powder, an aluminum titanate-based fired body to be obtained is a fired body comprising an aluminum magnesium titanate crystal. Examples of the magnesium source powder include a powder of magnesia (magnesium oxide) and a powder of a substance to be led to magnesia by firing in the air. Examples of the latter substance include a magnesium salt, a magnesium alkoxide, magnesium hydroxide, magnesium nitride, and metal magnesium.

Specific examples of the magnesium salt include magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

Specific examples of the magnesium alkoxide include magnesium methoxide and magnesium ethoxide. The magnesium source powder may contain trace components inevitably derived from the raw materials and contained in the production process.

As the magnesium source powder, a powder of a compound serving as the magnesium source and the aluminum source can also be used. Examples of such a compound include magnesia spinel ($MgAl_2O_4$). In the case where the powder of a compound serving as the magnesium source and the aluminum source is used as the magnesium source powder, the content thereof is controlled so as to adjust the following molar ratio within the above-mentioned ratio in the starting material mixture. The molar ratio is of the total amount of the aluminum source powder expressed on $Al_2O_3$ (alumina) basis and the Al component expressed on $Al_2O_3$ (alumina) basis contained in the powder of a compound serving as the magnesium source and the aluminum source, to the content of the titanium source powder expressed on $TiO_2$ (titania) basis.

In the present invention, as the magnesium source powder, one kind may be used solely and two or more kinds may be used in combination.

The particle diameter of the magnesium source powder is not particularly limited, and generally, a magnesium source powder used has a particle diameter corresponding to a cumulative percentage of 50 % on a volume basis (D50) in a range of 0.5 to 30 $\mu$m, which is measured by laser diffractometry. From the viewpoint of a suppressing the shrinkage ratio during firing of a starting material mixture shaped body, it is preferable to use a magnesium source powder having D50 in a range of 3 to 20 $\mu$m.

The content of the magnesium source powder expressed on MgO (magnesia) basis in the starting material mixture is, in a molar ratio, preferably 0.03 to 0.15, and more preferably 0.03 to 0.12, relative to the total amount of the aluminum source powder expressed on $Al_2O_3$ (alumina) basis and the titanium source powder expressed on $TiO_2$ (titania) basis. By the adjustment of the content of the magnesium source powder within this range, an aluminum titanate-based fired body with improved heat resistance, large pore diameter and open porosity can be relatively easily obtained.

The starting material mixture may further contain a silicon source powder. The silicon source powder is a powder of a substance to be led to a silicon component contained in an aluminum titanate-based fired body, and by using the silicon source powder in combination, an aluminum titanate-based fired body can be obtained with further improved heat resistance. Examples of the silicon source powder include powders of silicon oxides (silica) such as silicon dioxide and silicon monoxide.

The silicon source powder may be a powder of a substance to be led to silica by firing in the air. Examples of such a substance include silicic acid, silicon carbide, silicon nitride, silicon sulfide, silicon tetrachloride, silicon acetate, sodium silicate, sodium orthosilicate, feldspar, and glass frit. Out of them, feldspar, glass frit and the like are preferably used, and from the viewpoints of easiness in industrial availability and composition stability, glass frit and the like are more preferably used. Glass frit means flaky or powdery glass obtained by pulverizing glass. A powder comprising a mixture of feldspar and glass frit is also preferably used as the silicon source powder.

In the case of using glass frit, from the viewpoint of further improvement in heat decomposition resistance of an aluminum titanate-based fired body to be obtained, glass frit having a deformation point of not lower than 700°C is preferable to be used. In the present invention, the deformation point of glass frit is defined as a temperature (°C) at which expansion stops and subsequently shrinkage starts in the case where the expansion of the glass frit is measured by thermo mechanical analysis (TMA) by elevating temperature.

As glass constituting the glass frit, common silicate glass containing silicate ($SiO_2$) as a main component (more than 50% by mass in the entire components) can be used. The glass constituting the glass frit may further contain, as other components, alumina ($Al_2O_3$), sodium oxide ($Na_2O$), potassium oxide ($K_2O$), calcium oxide (CaO), magnesia (MgO) and the like, similarly to common silicate glass. The glass constituting the glass frit may contain $ZrO_2$ in order to improve the hot water resistance of glass itself.

In the present invention, one kind may be used solely and two or more kinds may be used in combination, as the silicon source powder.

The particle diameter of the silicon source powder is not particularly limited, and generally, a silicon source powder having a particle diameter corresponding to a cumulative percentage of 50% on a volume basis (D50) in a range of 0.5 to 30 $\mu$m, which is measured by laser diffractometry, is used. In order to further improve the filling ratio of shaped body of the starting material mixture and obtain a fired body with higher mechanical strength, it is more preferable to use a silicon source powder with D50 in a range of 1 to 20 $\mu$m.

In the case where the starting material mixture contains the silicon source powder, the content of the silicon source powder expressed on $SiO_2$ (silica) basis in the starting material mixture is generally 0.1 to 10 parts by mass, and preferably not more than 5 parts by mass relative to 100 parts by mass of the total amount of the aluminum source powder expressed on $Al_2O_3$ (alumina) basis and the titanium source powder expressed on $TiO_2$ (titania) basis. The silicon source powder may contain trace components derived from the raw materials or inevitably contained in the production process.

In the present invention, similar to a composite oxide such as magnesia spinel ($MgAl_2O_4$), a compound having two or more metal elements as components out of titanium, aluminum, silicon, and magnesium can be used as a starting material powder. In this case, such a compound can be considered to be the same as a starting material mixture obtained by mixing respective metal source compounds. Based on the consideration, the contents of the aluminum source powder, titanium source powder, magnesium source powder, and silicon source powder in the starting material mixture are adjusted within the above-mentioned ranges.

Further, the starting material mixture may contain aluminum titanate or aluminum magnesium titanate itself. In the case where aluminum magnesium titanate is used as a constitutive component of the starting material mixture, the aluminum magnesium titanate corresponds to a starting material serving as the titanium source, the aluminum source, and the magnesium source.

The starting material powders in the present invention can also contain powders behaving as a starting material to be led to conventionally known ceramics through firing step, and may not be limited to the powders to form the aluminum titanate-based ceramics. For example, the present invention also encompasses the case where starting material contains starting material powders such as a barium titanate powder, a zinc titanate zirconate powder, a silica powder, a silicon carbide powder, a silicon nitride powder, an aluminum oxide nitride (AlON) powder, a sialon (SiAlON) powder, an yttrium oxide powder, a YAG (yttrium aluminum garnet) powder, and a boron nitride powder, and the content of the powder is not less than 50% by weight relative to the entire weight of the ceramics source powders.

<Starting material mixture>

In the present invention, the aluminum titanate-based ceramics fired body is obtained by shaping a starting material mixture containing the aluminum source powder, titanium source powder, magnesium source powder, and silicon source powder to obtain a shaped body, and subsequently firing the shaped body. As compared with the case of directly firing the starting material mixture, the shrinkage can be suppressed during firing by carrying out the firing after shaping. Therefore, the cracking of a ceramics fired body to be obtained can be efficiently suppressed and also a porous aluminum titanate-based ceramics fired body with maintained pore shapes (aluminum titanate crystal) can be obtained. The structure of the shaped body is not particularly limited, and examples thereof include a honeycomb structure, a rod structure, a tubular structure, a plate structure, and a crucible structure. Particularly, in the case where a shaped body and a fired body obtained by firing the shaped body are formed into a honeycomb structure, the effect of production process of the present invention is remarkable. That is, cracking in a honeycomb shape is prevented by the production process of the present invention. In addition, examples of the honeycomb structure are not limited to the square lattice shape as depicted in Fig. 2, and also include a rhombic lattice shape and hexagonal lattice shape.

Even in the case where the honeycomb structure as in Fig. 2 is constituted by the partition walls 4 and the outer circumferential wall 3; and has an aperture ratio of not lower than 40% and not higher than 80% in the state of no sealing with the sealing part 7a; and also has a partition wall thickness of not thinner than 0.1 mm and not thicker than 1mm, the thermal conduction property is improved during firing and heat is transferred uniformly in the entire shaped body since the ceramics having a high thermal conductivity is used as a mat in the production process of the present invention. Therefore, a shaped body free from cracking (cut lines) and a split can be produced. The honeycomb structure may have no outer circumferential wall. The aperture ratio and the partition wall thickness are not limited to the constitution of Fig. 2, and other constitutions can be employed for honeycomb structure. The aperture ratio means the ratio of the area, which is obtained after subtracting $S_{DIV}$ from $S_{OUT}$, to $S_{OUT}$ (the aperture ratio (%) = $(S_{OUT}-S_{DIV})/S_{OUT} \times 100$), wherein $S_{DIV}$ is the total surface area of the partition wall parts and $S_{OUT}$ is the surface area in the inside region surrounded with the inner circumference of the outer circumferential wall 3 in the cross-section of the shaped body, the cross-section being disposed on the mat.

Even in the case where a surface of the shaped body, the surface being be disposed on the mat, has a cross-sectional area of not less than 7850 $mm^2$ (that is, in the case where the cross-sectional shape is circular, the diameter thereof is 100 mm or larger) and a height of the shaped body is not lower than 50 mm, which are relatively large sizes as an exhaust gas filter, a fired body having good filter capacity and being free from cracking in the entire can be produced by the process for producing a ceramics fired body of the present invention. In such a fired body, it is known that the control of cracking and the like becomes more difficult as the height becomes higher. According to the production process of the present invention, even in the case of a shaped body having the above-mentioned cross-sectional area and a height of not lower than 50 mm and not higher than 250 mm, a fired body free from cracking can be obtained.

Examples of a shaping machine used for shaping the starting material mixture include a uniaxial press machine, an extrusion shaping machine, a tabletting machine, and a granulator. In the case of carrying out extrusion shaping, the starting material mixture can be mixed with an additive (organic matter) such as a pore-forming agent, a binder, a lubricant, a plasticizer, a dispersant, or a solvent, and be shaped. These organic compounds are removed during firing and do not substantially exist in the fired body. In the case where the content of the organic compounds blended is not less than 10 parts by mass based on 100 parts by mass of the starting material powders, that is, in the case where the organic matter is contained in an amount of not less than 10% by mass in the total amount of the starting material powders, the open porosity of the honeycomb structure in the fired body becomes relatively high. The starting material powders mean powders containing elements constituting the fired body, and in the case where the fired body is aluminum titanate, the starting material powders mean each of the element source powders such as an aluminum source powder and a titanium source powder.

Examples of the pore-forming agent include carbon materials such as graphite; resins such as polyethylene, polypropylene, and polymethyl methacrylate; plant materials such as starch including corn starch, nut shells, walnut shells, and corn; ice; and dry ice. The additive content of the pore-forming agent is generally 0 to 40 parts by mass, and preferably 0 to 25 parts by mass relative to 100 parts by mass of the total amount of the aluminum source powder, titanium source powder, magnesium source powder, and silicon source powder.

Examples of the binder include celluloses such as methyl cellulose, carboxyl methyl cellulose, and sodium carboxyl methyl cellulose; alcohols such as polyvinyl alcohol; salts such as lignin sulfonic acid salt; waxes such as paraffin wax and microcrystalline wax; and thermoplastic resins such as EVA, polyethylene, polystyrene, liquid crystal polymers, and engineering plastics. The additive content of the binder is generally not higher than 20 parts by mass, and preferably not higher than 15 parts by mass relative to 100 parts by mass of the total amount of the starting material powders.

Examples of the lubricant and the plasticizer include alcohols such as glycerin; higher fatty acids such as capric acid, lauric acid, palmitic acid, alginic acid, oleic acid, and stearic acid; and metal stearate salts such as aluminum stearate. The additive content of the lubricant and plasticizer is generally 0 to 10 parts by mass, preferably 1 to 6 parts by mass, and more preferably 1 to 5 parts by mass relative to 100 parts by mass of the total amount of the starting material powders.

Examples of the dispersant include inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarboxylate and polyoxyalkylene alkyl ether. The additive content of the dispersant is generally 0 to 20 parts by mass, and preferably 2 to 8 parts by mass relative to 100 parts by mass of the total amount of the starting material powders.

Examples of the solvent include alcohols such as monohydric alcohols (methanol, ethanol, butanol, propanol, and the like) and glycols (propylene glycol, polypropylene glycol, ethylene glycol, and the like); and water. Water is preferable out of the solvents and ion-exchanged water is more preferably used from the viewpoint of little impurities. The content of the solvent to be used is generally 10 parts by mass to 100 parts by mass, and preferably 20 parts by mass to 80 parts by mass relative to 100 parts by mass of the total amount of the starting material powders.

A starting material mixture to be provided for shaping can be obtained by mixing (kneading) starting material powders containing the aluminum source powder, titanium source powder, magnesium source powder, and silicon source powder with the several kinds of additives by a mixer and the like.

The firing temperature in the production of the aluminum titanate-based fired body is generally not lower than 1300°C, and preferably not lower than 1400°C. The firing temperature is generally not higher than 1650°C, and preferably not higher than 1550°C. The heating rate to the firing temperature is not particularly limited, and is generally 1°C/hour to 500°C/hour. The heating rate may be kept constant to the desired firing temperature, and it may be gradated. In the case where a silicon source powder is used, it is preferable to go through a step of retaining the shaped body in a temperature range of 1100 to 1300°C for not shorter than 3 hours before the firing step. The melting and diffusion of the silicon source powder can be accelerated herewith. In the case where the starting material mixture contains a combustible organic additive such as a binder and the like, the firing step includes a degreasing step for removing the organic additive. The degreasing may be carried out typically in a step of heating to the firing temperature (for example, in a temperature range of 150 to 700°C). In the degreasing step, the heating rate preferably should be suppressed as much as possible.

The degreasing step may be carried out, for example, in the state where the shaped body is disposed on a pedestal mounted on a spacer. It is preferable to blow hot air to the center part of the shaped body from a space formed by the spacer and thus improve the combustion efficiency of the entire shaped body. The laminated pedestal with an unfired pedestal and a fired pedestal may be used. The unfired pedestal is generally made of a material similar to that of the shaped body. The fired pedestal is not particularly limited and one obtained by firing a shaped body in another step can be used for example.

The firing is generally carried out in atmospheric air; however, depending on the kinds of the starting material powders (that is, starting material powders such as the aluminum source powder, the titanium source powder, the magnesium source powder, and the silicon source powder), the pore-forming agent, the binder, the lubricant and plasticizer, or the ratio thereof used, the firing may be carried out in an inert gas such as nitrogen gas or argon gas, or in a reducing gas such as carbon monoxide gas or hydrogen gas. Further, the firing may be carried out in the atmosphere with increased or decreased water vapor partial pressure.

The firing is generally carried out using a common firing furnace such as a tubular electric furnace, a box type electric furnace, a tunnel furnace, an infrared furnace, a microwave heating furnace, a shaft furnace, a reverberating furnace, a rotary furnace, and a roller hearth furnace. The firing may be carried out in a batch manner or in a continuous manner. The firing may also be carried out in a static manner or in a fluidization manner.

The time required for the firing may be sufficient if the shaped body of the starting material mixture transits into a crystal such as an aluminum titanate-based crystal. The firing time differs depending on the amount of the starting material mixture, the model of the firing furnace, the firing temperature, and the firing atmosphere, and it is generally 10 minutes to 24 hours.

An aimed fired body can be obtained in the above-mentioned process. The fired body such as an aluminum titanate-based fired body has a shape maintained approximately the same as that of a shaped body immediately after shaping. The obtained aluminum titanate-based fired body may also be processed into a desired shape by grinding processing and the like.

In the case where the fired body is an aluminum titanate-based fired body, it may further have crystal patterns of alumina, titania and the like besides a crystal pattern of aluminum titanate or aluminum magnesium titanate in an x-ray diffraction spectrum. In the case where the aluminum titanate-based fired body comprises an aluminum magnesium titanate crystal, it may be represented by a composition formula: $Al_{2(1-x)}Mg_xTi_{(1+x)}O_5$, wherein the value for x is not lower than 0.03, preferably not lower than 0.03 and not higher than 0.15, and more preferably not lower than 0.03 and not higher than 0.12. The aluminum titanate-based fired body may further contain trace components derived from the raw materials or inevitably contained in the production process.

< Ceramics fired body>

A ceramics fired body obtained by the production process of the present invention may be a porous ceramics comprising mainly an aluminum titanate-based crystal. The phrase "comprising mainly an aluminum titanate-based crystal" means that the main crystal phase constituting the porous ceramics is an aluminum titanate-based crystal phase (comprising not less than 80% of aluminum titanate crystal phase), and the aluminum titanate-based crystal phase may be, for example, an aluminum titanate crystal phase, an aluminum magnesium titanate crystal phase, and the like.

The porous ceramics may contain a phase (crystal phase) other than the aluminum titanate-based crystal phase. Examples of the phase (crystal phase) other than the aluminum titanate-based crystal phase include phases derived from starting materials used for producing the porous ceramics. The phases derived from starting materials may include, more particularly, phases derived from the aluminum source powder, titanium source powder, and/or magnesium source powder remaining without forming the aluminum titanate-based crystal phase, in the case of producing the porous ceramics according to the process for producing a ceramics fired body of the present invention. In the case where the starting material mixture contains a silicon source powder, the porous ceramics further contains a phase derived from the silicon source powder such as a glass phase containing a $SiO_2$ component.

The ceramics fired body in the present invention may be a porous ceramics comprising mainly a silicon carbide-based crystal. The fired body can contain desired crystal phases by adjusting the conventionally known starting material powders.

The structure of the ceramics fired body in the present invention is not particularly limited, and may be a honeycomb structure, a rod structure, a tubular structure, a plate (sheet) structure, a crucible structure and the like. Out of them, in the case of being used as a ceramics filter such as DPF, the porous ceramics shaped body of the present invention is preferably formed into a honeycomb structure. The structure of a fired body is determined generally in accordance with the structure of the shaped body.

The ceramics fired body in the present invention may contain a glass phase. The glass phase means an amorphous phase containing $SiO_2$ as a main component. In this case, the content of the glass phase is preferably not higher than 5% by mass, and preferably not lower than 2% by mass. It becomes easy to obtain a ceramics fired body which satisfies the pore characteristics required for a ceramics filter such as DPF, by containing not more than 5% of a glass phase by mass.

The production process of the present invention may preferably be employed for producing a porous ceramics fired body having the above-mentioned pore characteristics and comprising mainly an aluminum titanate-based crystal. That is, the porous ceramics fired body of the present invention can be obtained by shaping a starting material mixture into shaped body, and firing the shaped body while laying on a mat containing a ceramics with a high thermal conductivity, wherein the starting material mixture contains an aluminum source powder, a titanium source powder, as well as a magnesium source powder and a silicon source powder, both of which are used arbitrarily.

In order to impart the pore characteristics to the porous ceramics fired body comprising mainly an aluminum titanate-based crystal, it is preferable to contain a silicon source powder in the starting material mixture. The above-mentioned compounds may be used as the silicon source powder, and out of them, glass frit, feldspar or a mixture thereof is preferably used. Further, in order to impart the pore characteristics to the porous ceramics fired body, the content of the silicon source powder is preferably adjusted to not lower than 2% by mass and not higher than 5% by mass in the inorganic components contained in the starting material mixture. The inorganic components contained in the starting material mixture are components containing elements constituting the porous ceramics shaped body, and typically the aluminum source powder, titanium source powder, magnesium source powder, and silicon source powder. Note that in the case where additives (a pore-forming agent, a binder, a lubricant, a plasticizer, a dispersant, and the like) contained in the starting material mixture contain inorganic components, the inorganic components are also included.

In order to impart the pore characteristics to the porous ceramics fired body, it is preferable to contain the magnesium source powder in the starting material mixture. The preferable content of the magnesium source powder in the starting material mixture is as described above.

Regarding a shaped body employing the production process of the present invention and a fired body produced by the shaped body, a linear shrinkage ratio in dimension of the fired body to the shaped body (the linear shrinkage ratio (%) = (dimensions of the shaped body - dimensions of the fired body)/(dimensions of the shaped body) x 100) of not lower than 1%. In the case of the shaped body with such a high linear shrinkage ratio during firing, cracking or split tends to be caused easily in the conventional production process; however, in the case of employing the production process of the present invention using a mat containing a ceramics with a high thermal conductivity, a fired body can be produced free from cracking or split.

The linear shrinkage ratio may be calculated by the following procedure. First, the value of the length (width of partition wall pitches) of a shaped body before firing (after extrusion shaping and before degreasing step) and the value of the length of a shaped body after firing are measured at two points for each shaped body in the direction of an extruded cross section (cross section of shaped body in the direction perpendicular to extrusion direction), and then the values are averaged. The obtained average length before firing (dimensions of shaped body) and the average length after firing (dimensions of fired body) are provided for the calculation of the linear shrinkage ratio according to the above formula.

The porous ceramics fired body produced by the process for producing a ceramics fired body of the present invention is free from cracking in the entire of the fired body, and is thus excellent in the filter capacity since the thermal stress can be reduced during firing by using a mat containing a ceramics with a high thermal conductivity.

EXAMPLES

Hereinafter, the present invention will be described in detail with reference to examples; however the present invention should not be limited to these examples.

<Linear shrinkage ratio>

The value of the length of a shaped body in a honeycomb structure before firing (after extrusion shaping and drying) and the value of the length of a shaped body after firing were measured at two points for each shaped body in the direction of an extruded cross section (cross section of shaped body in the direction perpendicular to extrusion direction), and then the values were averaged. The obtained average length before firing (width of partition wall pitches of shaped body) and the average length after firing (width of partition wall pitches of fired body) were used for calculating a linear shrinkage ratio according to the following formula.

$$\text{Linear shrinkage ratio (\%)} = \text{(dimensions of shaped body -}$$

$$\text{dimensions of fired body)/(dimensions of shaped body)} \times 100$$

(Example 1)

A starting material with the composition and an additive listed in Table 1 were mixed by a mixer to obtain a precursor mixture of a starting material mixture of a shaped body. The mode diameter of titanium(IV) oxide listed in Table 1 was about 1 $\mu$m.

[Table 1]

| Precursour mixture | | Mode diameter ($\mu$m) | Content (parts by mass) |
|---|---|---|---|
| Starting material powder | Titanium oxide (IV) | 1 | 41.97 |
| | $\alpha$ alumina powder | 29 | 24.63 |
| | Magnesia spinel powder | 5.5 | 15.68 |
| | Glass frit | 8.5 | 3.43 |
| Pore-forming agent | Corn starch grain | - | 14.3 |
| Binder | Methyl cellulose | - | 5.49 |
| | Hydroxypropyl methylcellulose | - | 2.35 |
| Lubricant | Unilube (registered trade name) | - | 4.64 |
| | Glycerin | - | 0.40 |

In Table 1, Unilube (registered trade name) was a polyoxyalkylene-based compound manufactured by Nippon Oil & Fats Co., Ltd. All of the pore-forming agent, binder, and lubricant listed in Table 1 were components (organic compounds) burned out by firing. The blended content of the titanium source powder expressed on titania basis was 49.0 parts by mass; the blended content of the aluminum source powder expressed on alumina basis was 41.8 parts by mass; the blended content of the magnesium source powder expressed on magnesia basis was 5.2 parts by mass; and the blended content of the silicon source powder expressed on silica basis was 4.0 parts by mass based on 100 parts by mass of the total amount of the components (that is, the starting material powders) excluding the components burned out of the components contained in the precursor mixture. A shaped body in a honeycomb structure was obtained with an extrusion shaping machine after adding 45 kg of water to 169.3 kg of the precursor mixture.

The obtained shaped body was a shaped body in a honeycomb structure having a diameter of 150 mm$\phi$, a cell density of 300 CPSI (300 cells for one square inch), and a thickness of partition wall of 0.3 mm, and the obtained shaped body was cut out so as to have a height of 230 mm. The shaped body was dried using a microwave drier to obtain a dried product of the shaped body. The dried product had an aperture ratio of 63.4% in a honeycomb structure.

<Degreasing and firing step>

Each of the shaped body in a honeycomb structure cut out in the above-mentioned height was disposed on a mat 1 mounted on a spacer 2 made of a ceramics with a height of 200 mm as depicted in Fig. 1. A mat plate used for the mat 1 had a thickness of 10 mm, was made of SiC and had a thermal conductivity of 100 W/ m · K at normal temperature.

In the disposition, the temperature was increased to 1500°C at a heating rate of 10°C /hour in atmospheric air and subsequently kept at 1500°C for 5 hours to obtain a ceramics fired body.

The linear shrinkage ratio in Example 1 was 12.7%. In the case where the ceramics fired body was represented by a composition formula: $Al_{2(1-x)}Mg_xTi_{(1+x)}O_5$, the ceramics fired body obtained in Example 1 had a value for x of 0.12.

(Comparative Example 1)

A ceramics fired body was produced in the same process as in Example 1, except that a mat was made of mullite having a thermal conductivity of 20 W/ m · K at normal temperature.

The ceramics fired body obtained by disposing on the mat made of SiC with a high thermal conductivity in Example 1 had no cracking or split in the entire height direction of the fired body, and an exhaust gas filter could be cut out of the fired body.

On the other hand, the ceramics fired body obtained by disposing on the mat made of mullite in Comparative Example 1 had a large split of not shorter than 100 mm on the surface brought into contact with the mat, and also a split of about 200 mm in the outer circumferential surface along the height direction. Further, when the fired body was lifted up at the time of transportation, the honeycomb structure was broken.

From these results, it is proved that a ceramics fired body with a good honeycomb shape can be produced by a process according to the production process of the present invention using a ceramics with a high thermal conductivity as a mat.

While the embodiments and examples of the present invention are described as described above, proper combinations of the constitutions of the above described embodiments and examples are also intended from the beginning.

It should be understood that the embodiments and examples disclosed herein are illustrative and are not restrictive in all respects. The scope of the present invention is not shown by the description described above, but is shown by the claims, and it is intended to comprise all modifications in the meaning and in the range of claims-equivalent.

INDUSTRIAL APPLICABILITY

The fired body to be obtained by the production process of the present invention is applicable for tools for a firing furnace such as a crucible, a setter, a sagger, and a refractory lining; exhaust gas filters and catalyst carriers to be used in exhaust gas purification for an internal combustion engine such as a diesel engine or gasoline engine; filtration filters to be used in filtration of beverage such as beer; ceramics filters such as a filter with permselectivity for selectively permeating gas components generated at the time of petroleum refining, for example, carbon monoxide, carbon dioxide, nitrogen, and oxygen; and electronic parts such as a substrate and a capacitor. In the case of being used particularly as a ceramics filter, the fired body in the present invention can retain good filter capacity for a long duration since it has a high pore volume and open porosity.

Explanation of symbols

| | |
|---|---|
| 1. | Mat; |
| 2. | Spacer; |
| 3. | Outer circumferential wall; |
| 4. | Partition wall; |
| 5 and 6. | Flow channels; |
| 7a and 7b. | Sealing parts; |
| 10. | Shaped body; |
| 20. | Ceramics honeycomb structure body |

**Claims**

1. A process for producing a ceramics fired body comprising a step of firing a shaped body, wherein

$$\text{a linear shrinkage ratio in dimension of the fired body to the shaped}$$

$$\text{body (the linear shrinkage ratio (\%) = (dimension of the shaped body -}$$

$$\text{dimension of the fired body) / (dimension of the shaped body)} \times 100) \text{ is not}$$

$$\text{lower than 1\% and}$$

the shaped body is fired while being disposed on a mat made of a ceramics having a high thermal conductivity.

2. The process according to claim 1, wherein the ceramics having a high thermal conductivity has thermal conductivity of not lower than 50 W/ m · K at normal temperature.

**3.** The process according to claim 1 or 2, wherein the ceramics having a high thermal conductivity contains aluminum nitride or silicon carbide.

**4.** The process according to any one of claims 1 to 3, wherein a surface of the shaped body, the surface being to be disposed on the mat, has a cross-sectional area of not less than 7850 mm$^2$ and a height of the shaped body is not lower than 50 mm.

**5.** The process according to any one of claims 1 to 4, wherein the starting material constituting the shape body contains an organic matter of not less than 10% by mass.

**6.** The process according to any one of claims 1 to 5, wherein the shaped body has a honeycomb structure.

**7.** The process according to claim 6, wherein the shaped body has an aperture ratio of not lower than 40% and not higher than 80% in a cross section parallel to the surface to be disposed on the mat, and has a partition wall thickness of not thinner than 0.1 mm and not thicker than 1 mm.

**8.** The process according to any one of claims 1 to 7, wherein the shaped body contains an aluminum source powder and a titanium source powder and forms an aluminum titanate composition by firing.

**9.** The process according to any one of claims 1 to 7, wherein the shaped body contains an aluminum source powder, a titanium source powder, and a magnesium source powder and forms an aluminum magnesium titanate composition by firing.

**10.** The process according to any one of claims 1 to 7, wherein the shaped body contains an aluminum source powder, a titanium source powder, a magnesium source powder, and a silicon source powder and forms an aluminum magnesium titanate composition by firing.

**11.** The process according to any one of claims 8 to 10, wherein the molar ratio of the aluminum source powder expressed on $Al_2O_3$ basis to the titanium source powder expressed on $TiO_2$ basis is 35/65 to 45/55.

**12.** The process according to claim 9 or 10, wherein the molar ratio of the magnesium source powder expressed on MgO basis is 0.03 to 0.15 relative to the total amount of the aluminum source powder expressed on $Al_2O_3$ basis and the titanium source powder expressed on $TiO_2$ basis.

**13.** The process according to claim 10, wherein the content of the silicon source powder expressed on $SiO_2$ basis is 0.1 to 10 parts by mass relative to 100 parts by mass of the total amount of the aluminum source powder expressed on $Al_2O_3$ basis and the titanium source powder expressed on $TiO_2$ basis.

[Fig. 1]

[Fig. 2]

[Fig. 3]

## INTERNATIONAL SEARCH REPORT

| | International application No. |
|---|---|
| | PCT/JP2010/066531 |

A. CLASSIFICATION OF SUBJECT MATTER
*C04B35/64*(2006.01)i, *B01D39/20*(2006.01)i, *B01D46/00*(2006.01)i, *C04B35/46*
(2006.01)i, *C04B38/00*(2006.01)i

According to International Patent Classification (IPC) or to both national classification and IPC

B. FIELDS SEARCHED

Minimum documentation searched (classification system followed by classification symbols)
C04B35/64, B01D39/20, B01D46/00, C04B35/46, C04B38/00

Documentation searched other than minimum documentation to the extent that such documents are included in the fields searched
Jitsuyo Shinan Koho          1922-1996     Jitsuyo Shinan Toroku Koho      1996-2010
Kokai Jitsuyo Shinan Koho    1971-2010     Toroku Jitsuyo Shinan Koho      1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2-199067 A  (Matsushita Electric Industrial Co., Ltd.),<br>07 August 1990 (07.08.1990),<br>claims; page 2, upper left column, line 17 to upper right column, line 2; example 1; drawings<br>(Family: none) | 1,4-7<br>2,3,8-13 |
| Y | JP 2003-165775 A  (Sumitomo Metal (SMI) Electronics Devices Inc.),<br>10 June 2003 (10.06.2003),<br>claims; paragraphs [0019], [0023]<br>& US 2003/0054120 A1     & US 2006/0035194 A1<br>& DE 10240161 A          & CN 1408678 A | 2,3 |

[X] Further documents are listed in the continuation of Box C.          [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 December, 2010 (02.12.10) | 14 December, 2010 (14.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/066531

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 8-48570 A  (Hitachi, Ltd.),<br>20 February 1996 (20.02.1996),<br>claims; paragraphs [0099], [0100]<br>(Family: none) | 2,3 |
| Y | WO 2008/078747 A1  (Hitachi Metals, Ltd.),<br>03 July 2008 (03.07.2008),<br>claims; paragraphs [0033], [0034]<br>& US 2010/0044911 A      & EP 2098493 A1<br>& CN 101553445 A | 8-13 |
| A | WO 2008/126320 A1  (Ibiden Co., Ltd.),<br>23 October 2008 (23.10.2008),<br>claims; paragraphs [0132], [0137]<br>& US 2008/0236724 A1      & EP 1974884 A1 | 1-13 |
| A | JP 2005-119886 A  (Hitachi Metals, Ltd.),<br>12 May 2005 (12.05.2005),<br>paragraphs [0004] to [0008]<br>(Family: none) | 1-13 |
| P,A | JP 2010-83738 A  (Hitachi Metals, Ltd.),<br>15 April 2010 (15.04.2010),<br>claims; paragraph [0031]; fig. 1<br>(Family: none) | 1-13 |
| A | JP 2002-249384 A  (Murata Mfg. Co., Ltd.),<br>06 September 2002 (06.09.2002),<br>paragraphs [0008], [0009], [0010]<br>(Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05105704 A
- WO 08078747 A
- JP 2002249384 A